**Europäisches Patentamt**

**European Patent Office**

**Office européen des brevets**

(19)

(11) **EP 1 215 895 A1**

## (12) DEMANDE DE BREVET EUROPEEN

(43) Date de publication:
**19.06.2002 Bulletin 2002/25**

(51) Int Cl.⁷: $H04N\ 5/33$, $H04N\ 5/217$

(21) Numéro de dépôt: **01403041.5**

(22) Date de dépôt: **27.11.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **05.12.2000 FR 0015746**

(71) Demandeur: **Thales**
**75008 Paris (FR)**

(72) Inventeurs:
• **Doittau, François-Xavier, Thales**
**94117 Arcueil Cedex (FR)**

• **Defour, Martin, Thales**
**94117 Arcueil Cedex (FR)**
• **Trezieres, Olivier, Thales**
**94117 Arcueil Cedex (FR)**
• **Pepin, Christian, Thales**
**94117 Arcueil Cedex (FR)**

(74) Mandataire: **Nguyen Van Yen, Christian**
**Thales Intellectual Property,**
**13, av. du Prés. Salvador Allende**
**94117 Arcueil Cedex (FR)**

(54) **Détecteur de lumière à correction synchrone de non-uniformité**

(57)     Ce détecteur de lumière, notamment infrarouge, corrige de manière continue les non-uniformités de ses capteurs par un flux de référence modulé de manière synchrone avec les fréquences de trames.

Le temps d'intégration et le flux de scène peuvent être choisis en fonction de la configuration de détection comme grandeur supplémentaire à moduler en synchronisme avec la fréquence de trames.

FIG.1

EP 1 215 895 A1

**Description**

L'invention appartient au domaine de l'imagerie optique. Elle concerne un dispositif de correction synchrone de non-uniformité applicable à des détecteurs de lumière, notamment infrarouge.

Lorsque les détecteurs sont composés de matrices de capteurs, ceux-ci ont souvent des réponses électriques différentes aux signaux optiques qu'ils reçoivent. Cette dispersion des réponses électriques peut en outre varier dans le temps, notamment dans le cas des capteurs de lumière infrarouge, lorsque la luminosité est très variable.

Il est connu de l'état de l'art d'ajouter au dispositif de détection une source lumineuse pour calibrer à intervalles réguliers les capteurs du détecteur de manière à corriger les réponses électriques et restituer des signaux représentatifs de la scène à détecter.

Dans le brevet US 5,420,421 la calibration mesure les réponses électriques des capteurs infrarouges à un grand ensemble de flux de lumière de référence produits par un corps noir uniforme en environnement contrôlé.

Dans le brevet GB 2 317 779, la source de référence est une diode infrarouge à luminescence modulable dont le flux est dirigé vers le détecteur pendant l'opération de calibration à l'aide d'un dispositif mécanique.

Ces deux dispositifs ont pour inconvénient commun d'occulter pendant la période de calibration le signal en provenance de la scène et donc de rendre le détecteur inopérant. L'amélioration de la calibration conduit donc à une dégradation du taux de service. En outre, ces moyens supposent la mise en place de dispositifs encombrants et coûteux.

La présente invention a pour objet de remédier à ces inconvénients en permettant une calibration non perturbante car en synchronisme, le cas échéant, permanent, avec la fréquence des trames détectée. Cette calibration est réalisée par le moyen d'un appareillage optique qui s'intègre complètement dans le dispositif de détection. Il n'accroît donc pas l'encombrement et peut être réalisé de manière économique.

A ces fins, l'invention propose un dispositif de détection de lumière du type comprenant des capteurs de lumière, une unité de traitement et au moins une source de lumière disposée et appareillée pour émettre et appliquer aux capteurs des flux de lumière de référence,

caractérisé en ce que lesdits flux de lumière de référence sont émis pendant tout ou partie de la période de fonctionnement du détecteur qui est modulé en amplitude de manière synchrone avec la fréquence des trames.

L'invention sera mieux comprise et ses différentes caractéristiques et avantages ressortiront de la description qui suit de plusieurs exemples de réalisations et de ses figures annexées dont :

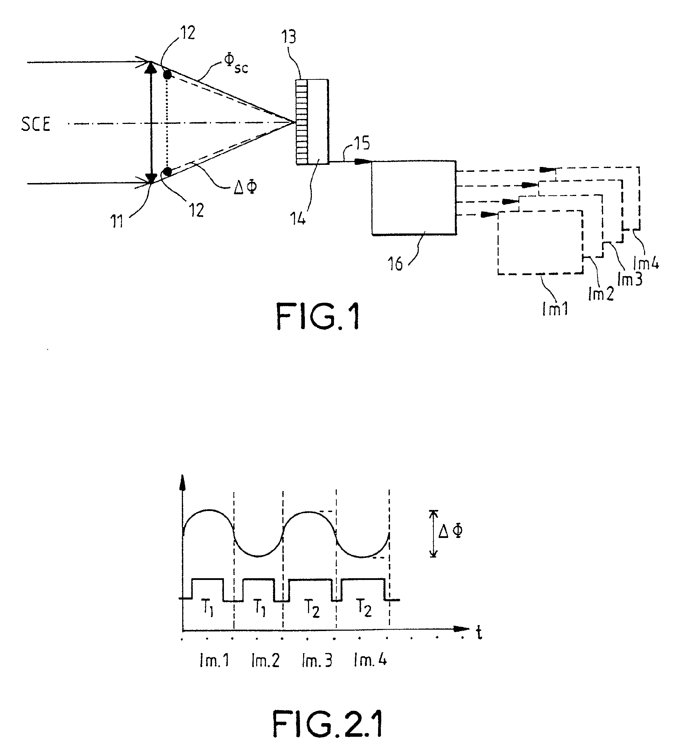

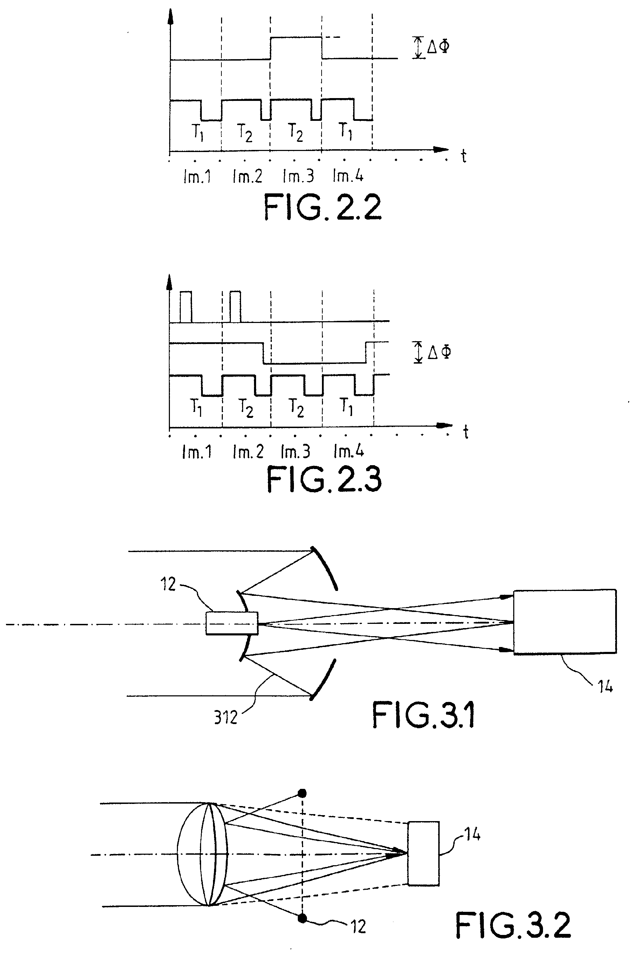

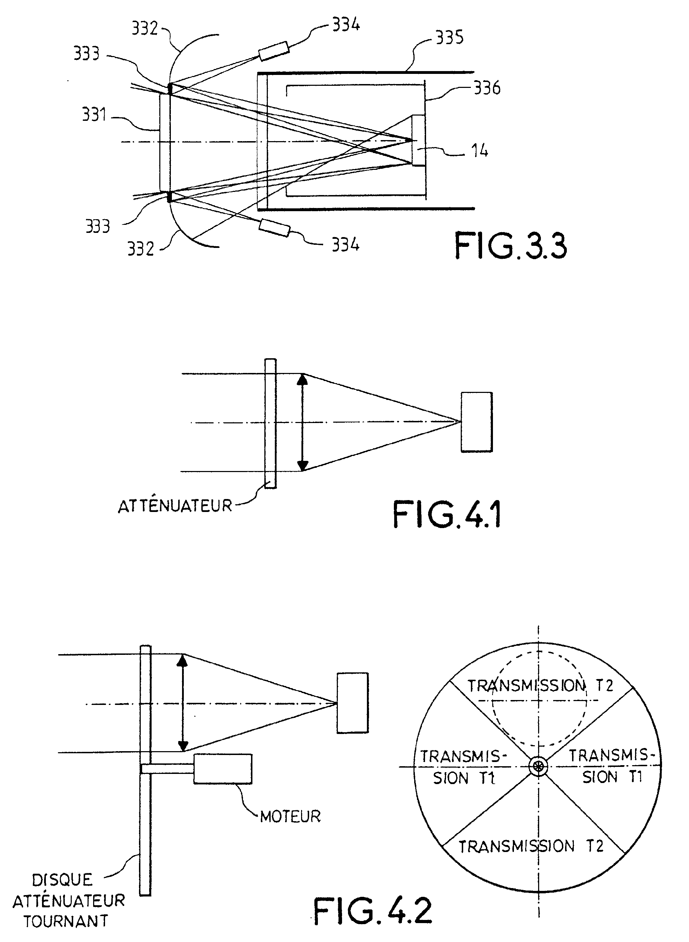

- la figure 1 est un schéma de principe de l'invention dans l'un de ses modes de réalisation ;
- les graphiques de la figure 2 illustrent plusieurs exemples de variations du flux de référence et du temps d'intégration par rapport à la fréquence de trame ;
- les dessins de la figure 3 représentent plusieurs modes de réalisations principaux de l'invention.
- les dessins de la figure 4 représentent plusieurs modes et réalisations et une variante de l'invention.

Sur la figure 1, les rayons de lumière en provenance de la scène SCE sont présentés à l'objectif 11 qui focalise les flux de scène $\Phi_{sc}$ sur des capteurs 13 assemblés en un détecteur 14. Le détecteur fournit des signaux électriques 15 à l'unité de traitement 16 qui fournit en sortie un ensemble de trames Im1, Im2, Im3, Im4. On entend par trame, un ensemble de pixels constituant une image à un instant donné. Par ailleurs, une ou plusieurs sources de lumière 12 situées derrière et à proximité de l'objectif 11 permettent d'appliquer un flux de référence $\Delta\Phi$ uniforme sur l'ensemble des capteurs 13 du détecteur 14. Le signal $\Delta\Phi$ peut être sinusoïdal ou carré notamment. Il peut être de luminescence positive ou négative. Le principe de l'invention consiste à appliquer une modulation des sources 12 de manière synchrone avec le défilement des trames Im1 à Im4, étant entendu que le temps d'intégration des signaux optiques sur chaque trame pourra être lui-même modulé de manière à ce que les paramètres caractéristiques de chacun des capteurs 13 du détecteur 14 puissent être mesurés à partir d'équations en nombre suffisant pour les résoudre. Lors d'une mesure en phase avec une image j, le signal électrique sur le capteur i à l'image j sera de la forme

$$S_{i,j} = \sum_{k=0}^{n} a_{i,k} \left( T_j \Phi_j \right)^k$$

lorsque n est l'ordre du facteur de rang le plus élevé que l'on considère pour l'approximation du signal électrique. Dans le cas d'une approximation linéaire, le signal sera de la forme

$$S_{i,j} = a_{i,1} T_j \Phi_i + a_{i,0}$$

Typiquement les fréquences de trames étant de l'ordre, dans les systèmes opérationnels, de quelques centaines de hertz, l'approximation linéaire entre plusieurs trames consécutives en nombres réduits est valable. On pourra donc facilement éliminer le facteur de bruit continu électrique $a_{i,0}$ en faisant varier le temps d'intégration $T_j$ d'une trame à l'autre. Par exemple de la trame Im1 à la trame Im2 de la figure 2.1. La correction de niveau continu d'origine électrique $a_{i,0}$ sera donc donnée par l'équation

$$a_{i,0} = S_{i,1} - T_1(S_{i,1} - S_{i,2})/ (T_1 - T_2)$$

Pour calculer le coefficient de gain du premier ordre $a_{i,1}$ on doit appliquer selon l'invention à partir de la source 12 un flux $\Delta\Phi$ vu de manière uniforme par l'ensemble des capteurs 13 de manière à pouvoir mesurer à partir de la trame (Im3) le signal résultant d'un flux $\Phi_j$ additionné au flux de référence $\Delta\Phi$ avec un temps d'intégration $T_2$ de telle sorte que coefficient de gain du premier ordre $a_{i,1}$ sera donné par la formule

$$a_{i,1} = (S_{i,3} - S_{i,2})/(T_2 \ \Delta\Phi)$$

L'hypothèse est faite, dans ce cas que la source 12 a un temps de commutation inférieur ou égal à la durée d'une trame, ce qui ne pose pas de problème particulier dans le cas de source laser. Si on utilise des sources rémanentes on cherchera à exploiter les mêmes phénomènes mais en calculant les différents coefficients avec des équations tirées de mesures sur un cycle de quatre trames. Le fonctionnement et les calculs sont illustrés par la figure 2.2.

Pour la correction de niveau continu on utilisera la moyenne des corrections calculées à partir des trames 1 et 3 d'une part, et 2 et 4 d'autre part afin de compenser l'erreur introduite par le fait que le flux de référence n'est plus constant pendant le temps d'intégration. De la même façon, on calculera la correction de gain en prenant la moyenne des corrections mesurées à partir des trames 1 et 2 d'une part, puis 3 et 4 d'autre part, le $\Delta\Phi$ n'étant pas tout à fait le même lors de ces deux mesures à cause de la variation du temps d'intégration.

Si l'on veut que la mesure des défauts soit non perturbante afin de pouvoir l'effectuer en continu, il faut que la variation du temps d'intégration d'une part, et la valeur du $\Delta\Phi$ d'autre part soient faibles, ce qui va donner un bruit de mesure élevé. Pour améliorer le rapport signal sur bruit des corrections mesurées, on va réaliser une moyenne des valeurs issues de chaque cycle sur un grand nombre de cycles, ce qui est équivalent à un filtre passe-bas. Cela est possible car les défauts des détecteurs évoluent lentement. La constante de temps du filtre équivalent devra être adaptée à la vitesse d'évolution des défauts. Si le nombre équivalent de mesures sommées est égal à N, le gain de rapport signal sur bruit sera $\sqrt{N}$. A titre d'exemple une solution classique pour réaliser ce filtrage consiste à sommer en continu les valeurs des paramètres de correction issues de chaque cycle de mesure de 3 ou 4 trames à la valeur filtrée précédente multipliée par un coefficient inférieur à 1.

Dans le cas des sources non rémanentes de type laser, on peut également appliquer un flux $\Delta\Phi$ pendant deux trames consécutives ou non en fonction du séquencement des variations de temps d'intégration. Ce mode de fonctionnement dans le cas d'une source laser est donné par la figure 2.3.

Dans un premier mode de réalisation technologique dans le cas de source modulable rémanente, la source 12 peut être constituée d'un fil résistif de petit diamètre. Ce fil est disposé sous la forme d'un cercle placé au bord de la pupille de l'optique, côté intérieur, afin d'être vu sous un angle quasi identique par tous les détecteurs de la matrice. Son diamètre doit être le plus petit possible, compte tenu d'un minimum de résistance mécanique nécessaire à sa fixation afin de posséder une capacité calorifique très faible permettant de réduire son inertie thermique. Une solution par dépôt sérigraphique ou par procédé de photogravure d'un métal sur un support peu conducteur de la chaleur est envisageable. Ce fil peut également être remplacé par un certain nombre de résistances uniformément réparties sur un cercle situé en bord de pupille ou de tube de flux. Le fil est alimenté par un courant pulsé à une fréquence moitié de la fréquence image de façon que le flux infrarouge émis présente une modulation $\Delta\Phi$ à une fréquence moitié de la fréquence image. Plus la constante de temps thermique du fil sera faible, plus la modulation du flux émis se rapprochera d'un signal carré idéal pour effectuer la mesure.

En remplaçant dans le montage précédent le fil chauffant par une fibre optique montée selon un cercle, on pourra, en envoyant dans la fibre des impulsions d'un laser infrarouge, appliquer à tous les détecteurs de la matrice le même $\Delta\Phi$. On obtiendra donc une source non rémanente. Dans un autre mode de réalisation, on place la source infrarouge à un endroit de l'optique tel que le flux qu'elle émet se réfléchisse sur un des dioptres de l'objectif, la source infrarouge est placée sur un cercle en dehors du tube de flux de l'optique. On peut, bien sûr, placer plusieurs sources ponctuelles au lieu d'une source continue.

Toute source infrarouge dans la bonne bande spectrale, modulable à la cadence image (qui peut aller jusqu'à quelques centaines de Hertz) est utilisable à condition que l'on puisse l'injecter sur le détecteur. Pour des exemples de sources à luminescence positive ou négative, on se reportera à « Applications of negative luminescence », T. Ashley, C.T. Elliott, N.T. Gordon, T. J. Phillips, R.S. Hall, Infrared Physics & Technology 38 (1997) 145-151. On pourrait imaginer que dans le cas de l'utilisation d'une optique avec occultation centrale (optique type « Cassegrain »), on utilise la zone de l'occultation centrale pour injecter le flux infrarouge modulé (voir figure 3.2.).

On pourrait également placer la source infrarouge à un endroit de l'optique tel que le flux qu'elle émet se réfléchisse sur un des dioptres de l'objectif. La source infrarouge est placée sur un cercle en dehors du tube de flux de l'optique. On pourrait bien sûr placer plusieurs sources ponctuelles au lieu d'une source continue (voir figure 3.2.)

La figure 3.3 illustre un mode de réalisation préféré de l'invention. Le détecteur 14 est par exemple constitué d'une matrice 540 x 680 capteurs, chaque capteur ayant une surface de l'ordre de 20 x 20 micromètres carrés. Selon les bandes infrarouges, les matériaux seront de type Indium/Antimoine (InSb), cadmium/Mercure/Tellure (Cd Hg Te) ou de type MCT (Mercure/Cadmium/Tellure) ou multipuits quantiques. La température de fonctionnement du détecteur doit être de l'ordre de 77° K. Il est nécessaire de prévoir une enceinte cryogénique 335 et un écran froid 336. Il est d'usage également de prévoir un miroir de réduction de flux 332 et un filtre d'apodisation 331 permettant de réduire les flux de scènes et pour éviter le brouillage des détecteurs par les flux de structure.

Pour réaliser la source de flux de référence 12, on placera sur le bord du filtre d'apodisation 331 une photogravure circulaire très fine d'un métal résistif 333 pour réaliser le filtre chauffant. On peut également placer à ce même endroit une couronne de cristal liquide commutée toutes les deux trames entre l'état transparent et l'état diffusant. Enfin, une troisième version consiste à placer en 333 un diffuseur sous forme de couronne, éclairé par une source infrarouge modulée. La modulation de la source sera réalisée par des diodes laser 334 éclairant la couronne 333. La succession des applications du flux $\Delta\Phi$ à des temps d'intégration différents $T_1$ et $T_2$ au cours du déroulement d'un cycle de quatre images Im1 à Im4 est illustrée par la figure 2.3. En plaçant l'instant de commutation du flux au milieu de la période de lecture de la matrice, on dispose de la même durée pour le temps de montée et le temps de descente du flux $\Delta\Phi$. Dans le cas d'une source pulsée de type laser il convient de caler les impulsions au centre de la période d'intégration.

L'endroit idéal pour injecter ce flux infrarouge modulé est dans le plan de la pupille en utilisant la couronne située au bord de la pupille utile dans la zone du miroir de réduction de flux car cette couronne devrait être vue de façon quasi identique par tous les détecteurs.

La couronne d'injection de flux pourra avoir plusieurs configurations :

- fil fin chauffant photogravé,
- couronne de cristal liquide déposée sur un miroir, commandée pour être soit transparente -elle se comporte alors comme un miroir- soit diffusante (elle diffuse le flux de la structure adjacente),
- couronne de diffuseur fixe éclairée en impulsions par quelques diodes laser ou plutôt diodes émettrices de lumière en bande IR2 (3-5 $\mu$m) réparties uniformément autour du détecteur,
- couronne de matériau fluorescent utilisé dans le dispositif d'harmonisation, éclairé par des diodes émettrices de lumière à 0,9 $\mu m$ réparties uniformément autour du détecteur.

L'invention dans les modes de réalisations principaux décrits ci-dessus permet de corriger les non-uniformités dans la grande majorité des configurations opérationnelles. Il est cependant des cas où la structure de l'appareillage des capteurs introduit elle-même des perturbations non-uniformes. Il faut alors pouvoir éliminer ce flux parasite dit flux de structure ($\Phi_{st}$).

Pour ce faire, on adjoindra un dispositif selon l'invention un appareillage permettant de moduler le flux de scène de trame en synchronisme avec la fréquence et de manière uniforme sur toute la matrice afin que dans le signal issu de chaque détecteur, la part du flux de scène soit multipliée par exemple de la trame Im2 à la trame Im4 par un coefficient k.

De cette manière, le flux de structure $\Phi_{st}$ peut être éliminé des équations donnant $S_{i,j}$ où il était apparu sans pouvoir être négligé. Il n'est d'ailleurs pas nécessaire, dans ce cas, de moduler le temps d'intégration qui sera donc une constante T. Dans le cas de l'approximation du premier ordre, les équations donnant le signal électrique pour un pixel donné sera donc pour deux trames Im2 et Im4,

$$_iS_{i,2} = a_{i,1}\ T(\Phi_{i\ st} + \Phi_{i\ sc}) + a_{i,0}$$

$$_iS_{i,4} = a_{i,1}\ T(\Phi_{i\ st} + k\ \Phi_{i\ sc}) + a_{i,0}$$

Si on appelle $C_i$ la correction soustractive à appliquer au signal, qui est la somme de $a_{i,0}$, correction du niveau continu électrique et du flux de structure $\Phi_{st}$, $C_i$ se déduit de manière simple en une équation ci-dessous,

$$C_i = (S_{i,4} - k\ S_{i,2})/(1 - k)$$

La modulation du flux de référence $\Delta\Phi$ permet de calculer le coefficient de gain comme dans le mode de réalisation principal.

Dans cette variante, on recherche un dispositif permettant d'obtenir une modulation de flux de scène peu perturbante et donc de faible amplitude ($0,9 \le k < 1$ par exemple).

Pour réaliser ce dispositif, une première solution consiste à utiliser un « atténuateur » à cristaux liquides tel que celui développé par la société Philips pour servir d'obturateur pour caméras CCD. Il s'agit d'un cristal liquide polymère fonctionnant comme un « hublot » plan qui peut continuellement passer d'un état parfaitement transparent à un état diffusant (il se comporte alors comme un dioptre dépoli). Selon la tension appliquée, l'effet de diffusion est plus ou moins marqué, ce qui permet de l'utiliser comme atténuateur variable. Ce type de composant est développé par Philips pour la bande spectrale visible et proche-infrarouge, mais il existe également des matériaux permettant de fonctionner de façon identique (par diffusion variable) dans l'infrarouge bande IR2 (3 à 5 µm) et probablement bande IR3 (8 à 12 µm).

Dans notre application, ce composant serait utilisé en mode binaire, soit transparent, soit légèrement diffusant (pour ne pas perturber l'image afin de pouvoir fonctionner en permanence), le temps de commutation d'un état à l'autre étant de l'ordre de la milliseconde, ce qui est compatible des fréquences de trames de quelques centaines de Hertz. Les dimensions disponibles sont de plusieurs centimètres de diamètre ce qui permet de placer ce dispositif pratiquement où l'on veut à l'intérieur du chemin optique (voir figure 4.1).

Le fait de placer l'atténuateur en pupille présente l'avantage de minimiser les effets qui seraient dus aux défauts d'uniformité de l'atténuateur lui-même.

Il est cependant possible de placer l'atténuateur à un autre endroit du chemin optique, et notamment à proximité d'un plan image. Si l'on place par exemple cet atténuateur dans un plan image intermédiaire, on obtiendra toujours une atténuation du flux de scène avec un facteur « k » identique sur tous les points de l'image, mais cette fois-ci, la lumière diffusée ne se retrouvera pas dans l'image (pour autant que l'on aura appliqué les règles de l'art pour la « piéger », à l'aide de baffles ou de diaphragmes). Par contre les défauts de non-uniformité du modulateur lui-même se retrouveront directement dans l'image.

Une autre solution mécanique est également utilisable, bien que plus encombrante. Il s'agit d'utiliser un disque tournant portant des zones de même épaisseur optique mais de transmission différentes que l'on fait passer alternativement dans les faisceaux optiques par la rotation du disque, en synchronisme avec la prise d'images (voir figure 4.2).

On pourrait utiliser aussi bien, au lieu d'un disque tournant, un volet oscillant à deux positions portant les deux lames atténuatrices.

Les lames atténuatrices peuvent être également constituées d'une lame transparente (à transmission aussi bonne que possible) et d'une lame identique légèrement dépolie sur une de ses faces.

L'invention décrite est particulièrement adaptée au cas des détecteurs infrarouges. Elle présente également des avantages pour des applications dans d'autres longueurs d'ondes, notamment dans le cas de capteurs CCD pour des applications spatiales où l'uniformité des CCD est un point particulièrement critique. Dans ce cas, la source de référence sera avantageusement une diode laser.

## Revendications

1. Dispositif de détection de lumière du type comprenant des capteurs de lumière (13), une unité de traitement (16), et au moins une source de lumière (12) disposée et appareillée pour émettre et appliquer aux capteurs (13) des flux de lumière de référence ($\Delta\Phi$), **caractérisé en ce que** lesdits flux de lumière de référence ($\Delta\Phi$) sont émis pendant tout ou partie de la période de fonctionnement du détecteur (14) et modulés en amplitude de manière synchrone avec la fréquence des trames (Im1, Im2, Im3, Im4).

2. Dispositif selon la revendication 1, **caractérisé en ce que** les capteurs de lumière (13) sont du type permettant d'analyser la lumière infrarouge.

3. Dispositif selon la revendication 1 ou la revendication 2, **caractérisé en ce que** la modulation de la source de lumière de référence (12) et les temps d'intégration ($T_1$, $T_2$) de la lumière de la scène (SCE) par l'unité de traitement (16) sont accordés pour que, pendant un cycle de trames (Im1, Im2, Im3, Im4), des flux de référence de valeurs moyennes différentes ($\Delta\Phi$) soient chacun appliqué aux capteurs pour plusieurs valeurs différentes de temps d'intégration ($T_1$, $T_2$).

4. Dispositif selon la revendication 1 ou la revendication 2, **caractérisé en ce que** le flux de lumière ($\Phi_{sc}$) en provenance de la scène (SCE) est également modulé en amplitude de manière synchrone avec la fréquence des trames.

5. Dispositif selon la revendication 3 ou la revendication 4, **caractérisé en ce que** le flux de lumière de référence est un signal sinusoïdal de fréquence multiple de la fréquence de trames.

6. Dispositif selon la revendication 3 ou la revendication 4, **caractérisé en ce que** le flux de lumière de référence est une suite périodique de signaux carrés choisis parmi les luminescences positives et/ou négatives.

7. Dispositif selon les revendications 3, 4, 5, ou 6, **caractérisé en ce que** l'unité de traitement est agencée pour calculer des paramètres caractéristiques de chaque capteur au cours d'un cycle de trames.

8. Dispositif selon la revendication 7, **caractérisé en ce que** l'unité de traitement est agencée pour calculer des valeurs corrigées des paramètres caractéristiques de chaque capteur sur un nombre de cycles.

9. Caméra comprenant un dispositif de détection de lumière selon une des revendications précédentes.

10. Dispositif d'imagerie comprenant un dispositif de détection de lumière selon une des revendications précédentes.

SCE

$\Phi_{sc}$

$\Delta \Phi$

15

16

Im1

Im2

Im3

Im4

## FIG.1

$\Delta \Phi$

$T_1$  $T_1$  $T_2$  $T_2$

t

Im.1  Im.2  Im.3  Im.4

## FIG.2.1

FIG.2.2

FIG.2.3

FIG.3.1

FIG.3.2

332

334

335

333

336

331

14

FIG.3.3

333

332

334

ATTÉNUATEUR

FIG.4.1

TRANSMISSION T2

TRANSMIS-
SION T1

TRANSMIS-
SION T1

MOTEUR

TRANSMISSION T2

DISQUE
ATTÉNUATEUR
TOURNANT

FIG.4.2

Office européen
des brevets

**RAPPORT DE RECHERCHE EUROPEENNE**

Numéro de la demande

EP 01 40 3041

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | GB 2 336 051 A (SECR DEFENCE) 6 octobre 1999 (1999-10-06) * page 1, ligne 28 - page 2, ligne 15 * | 1 | H04N5/33 H04N5/217 |
| A | US 4 276 474 A (CRAWFORD FRED I) 30 juin 1981 (1981-06-30) * colonne 1, ligne 39 - ligne 42 * | 1 | |

| DOMAINES TECHNIQUES RECHERCHES (Int.Cl.7) |
|---|
| H04N |

Le présent rapport a été établi pour toutes les revendications

| Lieu de la recherche | Date d'achèvement de la recherche | Examinateur |
|---|---|---|
| LA HAYE | 20 mars 2002 | Bequet, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
—————
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 01 40 3041

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-03-2002

| Document brevet cité au rapport de recherche | | Date de publication | Membre(s) de la famille de brevet(s) | | Date de publication |
|---|---|---|---|---|---|
| GB 2336051 | A | 06-10-1999 | EP | 1068724 A1 | 17-01-2001 |
| | | | WO | 9951024 A1 | 07-10-1999 |
| US 4276474 | A | 30-06-1981 | AUCUN | | |